(19) Europäisches Patentamt
European Patent Office
Office européen des brevets

(11) Veröffentlichungsnummer: **0 169 451**
**B1**

(12) # EUROPÄISCHE PATENTSCHRIFT

(45) Veröffentlichungstag der Patentschrifft: **17.01.90**

(51) Int. Cl.$^4$: **C 08 L 27/06**, C 08 K 5/00, C 08 K 5/19, H 01 M 2/16

(21) Anmeldenummer: **85108668.6**

(22) Anmeldetag: **11.07.85**

(54) **Sinterfähige, feinteilige Formmasse auf Basis von Vinylchlorid-Polymerisaten.**

(30) Priorität: **21.07.84 DE 3426929**

(43) Veröffentlichungstag der Anmeldung:
**29.01.86 Patentblatt 86/05**

(45) Bekanntmachung des Hinweises auf die Patenterteilung:
**17.01.90 Patentblatt 90/03**

(84) Bennante Vertragsstaaten:
**BE DE FR GB IT NL**

(56) Entgegenhaltungen:
**EP-A-0 040 758**
**EP-A-0 111 917**
**EP-A-0 137 360**
**DE-A-2 127 654**
**GB-A-2 098 129**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Engelmann, Manfred, Dr.**
**Kantstrasse 5**
**D-8269 Burgkirchen (DE)**
Erfinder: **Kraus, Helmut, Dr.**
**Thalhauser Strasse 20**
**D-8269 Burgkirchen (DE)**
Erfinder: **Plewan, Otto**
**Bischof-Saller-Strasse 15**
**D-8282 Neuötting (DE)**

EP 0 169 451 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft eine Formmasse, die im wesentlichen aus einem Gemisch von einem durch Suspensionspolymerisation erzeugten sinterfähigen Vinylchlorid-Acrylsäurealkylester-Copolymeren, mindestens einem weiteren sinterfähigen Vinylchlorid-Polymeren und mindestens einem Tensid besteht.

Es ist bekannt, Polyvinylchlorid zur Herstellung von gesinterten Formkörpern, beispielsweise von Separatorplatten für elektrische Zellen, einzusetzen. Entsprechende Formmassen wurden in den US-Patenten 3 766 106; 3 951 883; 4 137 381; 4 206 298; 4 323 661 beschrieben.

Alle diese Formmassen ergeben poröse gesinterte Formkörper, beispielsweise Separatorplatten, die vergleichsweise hart und steif sind, so daß sie bei Biegung um eine feste Kante, bereits bei Biegewinkeln unter 120°, ganz oder teilweise brechen. Solche Materialien sind zur Herstellung von sogenannten Separator-Taschen ungeeignet, da hierzu flexible Platten benötigt werden, die auch bei Biegung um 180° keine Risse aufweisen.

Solche flexiblen porösen Platten können aus Formmassen erzeugt werden, wie sie in der europäischen Patentanmeldung Nr. 111 917 beschrieben sind, jedoch sind die so hergestellten Platten lappig und haben verminderte Reißfestigkeit, wodurch die Verarbeitbarkeit zu den Separatorplatten erschwert wird. Ferner ist der Temperaturbereich beim Sintern solcher Formmassen enger, wodurch es schwieriger wird, einen bestimmten angestrebten Durchgangswiderstand der Platten beim Sintern zu erreichen. Bei lokalen Überhitzungen in der Sintermaschine können sich unerwünscht große Löcher in den Platten ausbilden, die diese als Separatoren unbrauchbar machen.

Es wurde nun überraschend gefunden, daß eine Mischung eines sinterfähigen Polymeren nach EP-OS 111 917 mit einem anderen sinterfähigen Polymeren auf Vinylchlorid-Basis, welches für sich allein verarbeitet, gesinterte Platten ergibt, die nicht flexibel sind und völlig unzureichende Biegewinkel zeigen, zu Formmassen führt, die gesinterte, poröse Platten mit verbesserten Biegewinkeln sowie guter Steifigkeit und Reißfestigkeit ergeben. Eine solche Mischung ist ferner beim Sintern weniger empfindlich als die unvermischten sinterfähigen Polymeren nach EP-OS 111 917.

Die neue sinterfähige, feinteilige Formmasse besteht im wesentlichen aus einem Gemisch von mindestens zwei Polymeren auf Basis von Vinylchlorid und mindestens einem Tensid, in dem jedes der Polymeren einen K-Wert von 55 bis 90 und die Polymerenmischung eine mittlere Korngröße von 10 bis 50 µm, ein Schüttgewicht von 400 bis 700 g/dm$^3$ und eine Kornverteilung von

99 bis 30 Gew.-%, bezogen auf die Mischung $<$ 33 µm

1 bis 60 Gew.-%, bezogen auf die Mischung von 33 bis 63 µm

0 bis 9 Gew.-%, bezogen auf die Mischung von 63 bis 125 µm

0 bis 1 Gew.-%, bezogen auf die Mischung $>$ 125 µm aufweist und ist dadurch gekennzeichnet, daß das Gemisch enthält:

I) 95 bis 10 Gew.-%, bezogen auf das Gemisch, von einem durch Suspensionspolymerisation in wäßriger Phase hergestellten sinterfähigen Copolymerisat oder Pfropfcopolymerisat, dessen Polymer-Anteil besteht aus:

- a) 90 bis 70 Gew.-% polymerisierten Einheiten des Vinylchlorids,
- b) 10 bis 30 Gew.-% polymerisierten Einheiten mindestens eines Acrylsäurealkylesters mit 4 bis 10 C-Atomen in der Alkylgruppe,
- c) 0 bis 7 Gew.-% polymerisierten Einheiten des Ethylens, die aus einem Ethylen-Vinylacetat-Mischpolymerisat stammen, das zur Herstellung des Pfropfcopolymerisates verwendet wurde,
- d) 0 bis 15 Gew.-% polymerisierten Einheiten des Vinylacetats mit der Maßgabe, daß die Menge von d) mindestens 3/7 der Menge von c) und die Summe der Mengen von b) plus c) plus d) 10 bis 30 Gew.-% beträgt; ferner

II) 5 bis 90 Gew.-%, bezogen auf das Gemisch von mindestens einem sinterfähigen Polymerisat oder Pfropfcopolymerisat, dessen Polymer-Anteil besteht aus:

- α) 100 bis 95 Gew.-% polymerisierten Einheiten des Vinylchlorids,
- β) 0 bis 5 Gew.-% polymerisierten Einheiten des Ethylens, die aus einem Ethylen-Vinylacetat-Mischpolymerisat stammen, das zur Herstellung des Pfropfcopolymerisates verwendet wurde,
- γ) 0 bis 5 Gew.-% polymerisierten Einheiten des Vinylacetats mit der Maßgabe, daß die Menge von γ) mindestens 3/7 der Menge von β) und die Menge von β) plus γ) 0 bis 5 Gew.-% des Polymeranteils beträgt; weiterhin

III) 0,05 bis 5 Gew.-%, bezogen auf das Gemisch von mindestens einem wasserlöslichen Tensid, das ein Bestandteil eines oder mehrerer Polymerisate sein kann die vorstehend unter I und/oder II beschrieben sind, mit der Maßgabe, daß die Mengen von I plus II plus III 100 Gew.-% des Gemisches ergeben.

Über 95 Gew.-% an Komponente I zeigt das Gemisch keine Verbesserung gegenüber der reinen Komponente I, unter

10 Gew.-% sind die erzeugten Platten nicht ausreichend flexibel, bei der Herstellung von Separator-Taschen treten Risse auf. Vorzugsweise enthält das Gemisch der Polymeren 60 bis 25 Gew.-% der Komponente I.

Die Komponente I ist ein Vinylchlorid-Acrylsäurealkylester-Copolymerisat, das als weiteres Comonomeres Vinylacetat enthalten kann und/oder auf ein Ethylen-Vinylacetat-Copolymeres gepfropfte Anteile enthalten kann. Sind in diesem Copolymerisat weniger als 10 Gew.-% polymerisierte Einheiten eines Acrylsäurealkylesters vorhanden, so wird mit dem Polymer-Gemisch keine ausreichende Flexibilität der gesinterten Formkörper erreicht. Besteht die Komponente I zu mehr als 30 Gew.-% aus polymerisierten Einheiten eines Acrylsäurealkylesters, so treten Schwierigkeiten beim Sintern auf, die die Herstellung von Platten eines bestimmten gewünschten Durchgangswiderstandes wesentlich erschweren oder sogar unmöglich machen. Vorzugsweise sind in der Komponente I 15 bis 25 Gew.-% Acrylsäurealkylester enthalten. Die Alkylgruppe des Acrylsäurealkylesters soll 4 bis 10 C-Atome haben. Ester mit Alkylgruppen von weniger als 4 und mehr als 10 C-Atomen geben keine genügende Flexibilität der gesinterten Formkörper. Geeignete Acrylsäurealkylester sind solche, die als Homopolymerisate Glasumwandlungstemperaturen (Tg) von 203 bis 248°K aufweisen, wobei bevorzugt solche Ester verwendet werden, deren Alkylgruppe 4 bis 8 C-Atomen enthält.

Wenn die Komponente I nur polymerisierte Einheiten von Vinylchlorid und Acrylsäurealkylester aufweist, können bereits flexible gesinterte Formkörper, beispielsweise Separatorplatten für elektrische Zellen, mit guten Eigenschaften erhalten werden. Diese können noch verbessert werden, wenn der Polymer-Anteil der Komponente I zusätzlich polymerisierte Einheiten von Vinylacetat enthält. Eine weitere Verbesserung ist zu beobachten, wenn der Polymer-Anteil der Komponente I polymerisierte Einheiten des Vinylacetats und des Ethylens enthält, mit der Maßgabe, daß die Menge der polymerisierten Vinylacetat-Einheiten mindestens 3/7 der Menge der polymerisierten Ethylen-Einheiten beträgt. Liegt der Gehalt der polymerisierten Einheiten des Vinylacetats unter 3/7 der Menge der polymerisierten Einheiten des Ethylens, macht die Herstellung der Komponente I Schwierigkeiten, es tritt Klumpenbildung bei der Polymerisation auf, die erwünschte Gleichmäßigkeit der erzeugten Polymerkörper, die ihrerseits eine gleichmäßige Porengrößenverteilung im gesinterten Formkörper zur Folge hat, wird nicht erreicht.

Höhere Anteile als 15 Gew.-% polymerisierte Vinylacetat-Einheiten in der Komponente I beeinflussen die Flexibilität der gesinterten Formköper negativ. Gute Ergebnisse werden erhalten, wenn der Polymer-Anteil der Komponente I 0,3 bis 11 Gew.-% polymerisierte Einheiten des Vinylacetats enthält. Das Vinylacetat wird einerseits als solches, andererseits auch als Mischpolymerisat mit Ethylen im Gewichtsverhältnis 70 : 30 bis 30 : 70 zur Polymerisation von Vinylchlorid zwecks Herstellung der Komponente I eingesetzt.

Wenn der Polymer-Anteil der Komponente I mehr als 7 Gew.-% polymerisierte Einheiten des Ethylens enthält, wird die Teilchengröße ungleichmäßig. Es wird dann schwierig, im erfindungsgemäßen Polymer-Gemisch die Teilchengrößenverteilung einzuhalten, die zur Herstellung gesinterter Separatorplatten erforderlich ist. Vorzugsweise enthält der Polymer-Anteil der Komponente I 0,3 bis 2,5 Gew.-% polymerisierte Einheiten des Ethylens.

Die Komponente I wird hergestellt, wie in EP-OS 111 917 Seite 10, Zeile 18, bis Seite 17, Zeile 9, beschrieben. Es kann hierbei auch ohne Emulgator polymerisiert werden, wenn durch entsprechende Bewegung der Polymerisationsmischung eine Teilchengrößenverteilung, wie weiter oben beschrieben, erreicht werden kann. Falls bei der Polymerisation keine Emulgatorsäure eingesetzt wird, sollte zweckmäßig nach der Polymerisation, aber vor der Trocknung des Polymeren, dem Ansatz etwa 0,01 bis 5 Gew.-%, bezogen auf das trockene Polymere, von einer Säure zugegeben werden, deren pKs-Wert in wäßriger Lösung bei 20 °C höchstens 3 beträgt.

Die Komponente II des erfindungsgemäßen Polymer-Gemisches kann aus einem oder mehreren sinterfähigen Polymerisaten bestehen, dessen (deren) Polymer-Anteil aus 100 bis 95 Gew.-% polymerisierten Einheiten des Vinylchlorids, 0 bis 5 Gew.-% polymerisierten Einheiten des Ethylens und 0 bis 5 Gew.-% polymerisierten Einheiten des Vinylacetats besteht, mit der Maßgabe, daß die Menge der polymerisierten Einheiten des Vinylacetats mindestens 3/7 der Menge der polymerisierten Einheiten des Ethylens und die Summe der polymerisierten Einheiten des Ethylens und des Vinylacetats 0 bis 5 Gew.-% des Polymer-Anteils beträgt. Als Komponente II können durch Emulsions-, Suspensions- oder Masse-Polymerisation erzeugte Vinylchlorid-Homopolymerisate verwendet werden, ebenso Copolymerisate mit bis zu 5 Gew.-% polymerisierten Einheiten des Vinylacetats sowie auch Pfropfpolymerisate, die als Pfropfgrundlage ein Ethylenvinylacetat-Copolymerisat enthalten.

Die als Komponente II eingesetzten Polymerisate können nach konventionellen Verfahren hergestellt werden oder beispielsweise wie in den US-Patenten 3 951 883; 4 137 381; 4 206 298 oder 4 323 661 beschrieben.

Sofern die als Komponente II dienenden Polymerisate nach dem Suspensions- oder Masseverfahren polymerisiert werden, kann auf die Zugabe eines Emulgators verzichtet werden, wenn durch entsprechende Bewegung der Reaktionsmischung eine Korngrößenverteilung erreicht werden kann, wie sie oben näher beschrieben ist. Sofern das Polymere durch Suspensionspolymerisation erzeugt wird, ist der Einsatz einer Emulgatorsäure, wie er beispielsweise in den US-Patentschriften 3 951 883; 4 206 298 und 4 323 661 beschrieben ist, entbehrlich, wenn zweckmäßig nach Beendigung der Polymerisation, aber vor der Trocknung, im Ansatz 0,01 bis 5 Gew.-%, bezogen auf trockenes Polymeres, von einer Säure zugesetzt werden, deren pKs-Wert in wäßriger Lösung bei 20°C höchstens 3 beträgt.

Sowohl als Komponente I wie auch als Komponente II des erfindungsgemäßen Polymer-Gemisches sind Polymerisate einzusetzen, welche sinterfähig sind. "Sinterfähig" im Sinne der vorliegenden Erfindung ist ein Polymerisat dann, wenn es in 0,4 mm starker gleichmäßiger Schicht auf eine Fläche aufgeschüttet und anschließend in 225°C heißer Luft während 2 bis 4 Minuten gesintert wird, Platten ergibt, die folgenden Forderungen genügen:

| | |
|---|---|
| Reißfestigkeit | mindestens 3 $N/mm^2$ |
| Reißdehnung | mindestens 3 % |

| | |
|---|---|
| Porosität | mindestens 5 $cm^3$/100 g Probe |
| max. Porengröße | höchstens 75 µm. |

Genauere Angaben zu den Meßmethoden siehe weiter unten.

Besonders gute Ergebnisse werden erhalten, wenn von der Komponente II 30 bis 80 Gew.-% im Polymeren-Gemisch eingesetzt werden. Die Verwendung eines Vinylchlorid-Polymerisates, dessen Polymer-Anteil zu 100 Gew.-% aus polymerisierten Einheiten des Vinylchlorids besteht, als Komponente II ist aus wirtschaftlichen Gründen und wegen der guten Qualität der erhaltenen gesinterten Formkörper bevorzugt.

Das Polymer-Gemisch enthält 0,05 bis 5 Gew.-%, bezogen auf das Gemisch von mindestens einem Tensid. Unter 0,05 Gew.-% können aus dem Polymer-Gemisch nur Sinterkörper erhalten werden, die nicht das gewünschte Eigenschaftsbild aufweisen, über 5 Gew.-% wird keine Verbesserung der Eigenschaften, häufig sogar eine Verschlechterung, festgestellt, weshalb höhere Zusätze unnötig sind. Vorzugsweise enthält das Polymer-Gemisch 0,05 bis 2 Gew.-% von mindestens einem Tensid. Dieses Tensid bzw. diese Tenside können ein Bestandteil des oder der Polymeren sein, die als Komponente I und/oder die als Komponente II im Polymer-Gemisch vorliegen. Der Tensid-Gehalt des oder der Polymeren kann bei der Herstellung des Polymeren vor, während oder nach der Polymerisation zugesetzt worden sein, wie beispielsweise in den US-Patentschriften 3 951 883; 4 137 381; 4 206 298; 4 323 661 und der europäischen Offenlegungsschrift 111 917 beschrieben. Tenside sowie ihre Herstellung sind beispielsweise beschrieben in Ullmanns Enzyklopädie der technischen Chemie, 4. Auflage, Bd 22 (1982), S. 467, rechte Spalte, bis S. 500, linke Spalte.

Bevorzugt werden Tenside eingesetzt, die für die Polymerisation von VC geeignete oberflächenaktive Emulgatoren sind. Solche Emulgatoren sind beispielsweise beschrieben in H. Kainer "Polyvinylchlorid und Vinylchlorid-Mischpolymerisate", Springer Verlag/Berlin, 1965, S. 35 Mitte bis S. 46 oben, besonders geeignet sind Emulgatoren, deren HLB-Wert zwischen 10 und 40 liegt. Der HLB-Wert kann nach verschiedenen Methoden bestimmt werden, siehe Römpp's Chemie Lexikon, 7. Auflage, Stuttgart 1973, Bd 3 H - L, Seite 1478, rechte Spalte.

Beispielsweise sind folgende Emulgatoren geeignet: Alkali-, Erdalkali- oder Ammoniumsalze von Fettsäuren wie Laurin-, Palmitin- oder Stearinsäure; von sauren Fettalkohol-Schwefelsäureestern, von Sulfobernsteinsäuredialkylestern, sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl-oder Linolsäure, oder ungesättigten Oxyfettsäuren wie Rizinolsäure, ferner Alkylsulfonsäuren mit mindestens 8 C-Atomen sowie Alkylarylsulfonsäuren mit mindestens 3 C-Atomen in der Alkylkette, wie Dodecylbenzol- oder Dibutylnaphthalinsulfonsäuren und deren Alkali-, Erdalkali- oder Ammoniumsalze.

Weiterhin Oxyethylen-Gruppen enthaltende Fettsäure-Teilester mehrwertiger Alkohole wie Polyoxyethylenglycerinmonostearat; Polyoxyethylen-sorbitanmonolaurat, -oleat, -palmitat oder -stearat; Polyoxyethylenester von Fettalkoholen oder aromatischen Hydroxyverbindungen; Polyoxyalkylenester von Fettsäuren, sowie Polypropylenoxid-Polyethylenoxid-Kondensationsprodukte.

Kationische Emulgatoren ergeben zwar ebenfalls sinterfähige Formmassen, doch sind sie weniger vorteilhaft bei der Polymerisation verwendbar, da sie lange Polymerisationszeiten bewirken, so daß sie einen zu hohen Initiator-Einsatz erfordern, um wirtschaftlich vertretbar arbeiten zu können. Es können auch Mischungen verschiedener Emulgatoren in dem Polymer-Gemisch vorhanden sein.

Im allgemeinen reicht ein Emulgatorgehalt des Polymeren Gemisches von 0,05 bis 0,5 Gew.-% aus, um gute gesinterte Formkörper, beispielsweise Separatoren für elektrische Zellen zu erhalten, jedoch kann ohne wesentlichen Qualitätsverlust die Polymeren-Mischung bis zu 5 Gew.-% Emulgator enthalten. Als Komponente II kann also auch ein größerer Anteil eines durch Emulsions-Polymerisation hergestellten Vinylchlorid-Polymerisates mit einem vergleichsweise hohen Emulgatorgehalt von beispielsweise 4 Gew.-%, bezogen auf das Polymere, ohne nachteilige Wirkung auf die Verwendbarkeit im Polymeren-Gemisch eingesetzt werden.

Die Komponente III des erfindungsgemäßen Gemisches enthält entweder anstelle des Emulgators oder zusätzlich zu diesem vorteilhaft 0,05 bis 0,5 Gew.-%, bezogen auf das Gemisch, von mindestens einem wasserlöslichen Netzmittel, das eine Ammonium-Gruppe aufweist, die mit einer Carbon-oder Sulfonsäuregruppe ein Salz bildet. Unterhalb 0,05 Gew.-% wird die für eine gute Separatorplatten-Qualität erforderliche kapillare Steighöhe nicht erreicht, oberhalb 0,5 Gew.-% wird keine verbessernde Wirkung des Netzmittels mehr festgestellt, im Gegenteil können bei hohen Netzmittelgehalten Schwierigkeiten durch Schäumen auftreten, wenn die Separatorplatten in elektrischen Zellen eingesetzt werden, in denen sich beim Gebrauch oder während der Aufladung ein Gas entwickelt. Gute Ergebnisse werden erhalten, wenn die Formmassen 0,01 bis 0,1 Gew.-% von mindestens einem der beschriebenen Netzmittel enthalten. Das verwendete Netzmittel soll ausreichend, das heißt bei 20°C zu mehr als 2 Gew.-%, in Wasser löslich sein, 12 bis etwa 50 C-Atome und eine Ammonium-Gruppe aufweisen, die mit einer Carbon- oder Sulfonsäuregruppe ein Salz bildet. Diese Ammonium-Gruppe enthält ein N-Atom, das eine positive Ladung trägt und 4 Bindungen betätigt, wovon 1 bis 4 Bindungen mit C-Atomen und der Rest (3 bis 0) Bindungen mit H-Atomen sind.

Vorzugsweise werden als Netzmittel Verbindungen folgender Formeln eingesetzt:

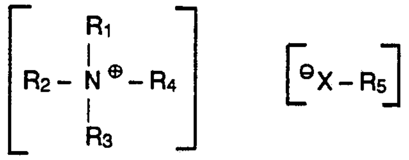

(I)

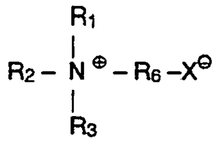

(II)

hierin bedeuten X eine -COO⁻ oder eine $-SO_3^-$-Gruppe

$R_1$ Wasserstoff oder eine Alkyl- oder eine Arylalkyl-Gruppe

$R_2$, $R_3$ und $R_4$, jedes für sich eine Alkyl- oder eine Arylalkyl-Gruppe, die gegebenenfalls in der Alkylkette durch Ether-Sauerstoffbrücken unterbrochen sein kann, insbesondere so, daß $-C_2H_4O-$ oder $-C_3H_6O-$Gruppen in der Kette liegen;

$R_5$ einen Alkyl- oder Alkylaryl-Rest und

$R_6$ einen Alkylen-Rest, wobei alle Reste $R_1$ bis $R_6$ und gegebenenfalls auch X zusammen 12 bis etwa 50 Kohlenstoffatome enthalten und mindestens einer der Reste $R_1$ bis $R_4$ sowie der Rest $R_5$ je mindestens 8 Kohlenstoffatome enthalten.

Es können auch Mischungen mehrerer der oben näher beschriebenen Netzmittel verwendet werden.

Das bzw. die Netzmittel können bereits von der Polymerisation und Aufarbeitung her in einem oder mehreren der Polymeren vorhanden sein, die als Komponente I und/oder als Komponente II in dem erfindungsgemäßen Polymeren-Gemisch vorliegen.

Beispielsweise wenn diese Polymeren nach den US-Patenten 4 137 381; 4 323 661 oder der europäischen Offenlegungschrift 111 917 hergestellt wurden.

Wenn der in den als Komponente I und II verwendeten Polymeren von der Herstellung vorhandene Tensid-Gehalt nicht ausreicht, wird dem Polymeren-Gemisch weiteres Tensid im Rahmen der oben angegebenen Mengen-Bereiche als Lösung, Dispersion oder in feiner Verteilung als Feststoff zugegeben, wobei das Polymeren-Gemisch zweckmäßig bewegt wird, um eine gleichmäßige Verteilung zu erzielen. Gegebenenfalls wird das Polymeren-Gemisch anschließend getrocknet.

Der K-Wert der Polymeren, die im erfindungsgemäßen Gemisch verwendet werden, liegt im Bereich von 55 bis 90. Unterhalb eines K-Wertes von 55 und oberhalb eines K-Wertes von 90 ist das Polymeren-Gemisch schwerer zu verarbeiten und ergibt im allgemeinen gesinterte Platten von geringerer Qualität.

Das Schüttgewicht des Polymeren-Gemisches liegt zweckmäßig im Bereich von 400 bis 700 g/l. Niedrigere Schüttgewichte führen im allgemeinen zu geringerem Produktionsausstoß sowie zu grobporigeren Platten mit weniger guten mechanischen Eigenschaften, höhere Schüttgewichte führen im allgemeinen zu Platten mit unerwünscht hohem elektrischem Durchgangswiderstand. Vorzugsweise werden Polymeren-Gemische mit einem Schüttgewicht von 450 bis 600 g/l eingesetzt.

Zur Herstellung von gesinterten Platten, die als Separatoren für elektrische Zellen Verwendung finden, muß das Polymeren-Gemisch eine mittlere Korngröße (mittleren Korndurchmesser), gemessen durch Sedimentationsanalyse, von 10 bis 50 µm besitzen. Oberhalb einer mittleren Korngröße von 50 µm neigen die hergestellten Platten in zunehmendem Maße zur Grobporigkeit, unterhalb 10 µm mittlerer Korngröße ist es im allgemeinen zu schwierig, noch ausreichend durchlässige Platten zu erzeugen. Vorzugsweise werden Polymeren-Gemische mit einer mittleren Teilchengröße von 20 bis 35 µm eingesetzt. Für die Bestimmung der mittleren Teilchengröße empfiehlt sich die Sedimentationsanalyse, da sie Teilchengrößenbereiche unter 33 µm genauer erfaßt und weniger anfällig gegen Störungen infolge elektrostatischer Aufladung der Polymerteilchen ist.

Das erfindungsgemäße Polymeren-Gemisch enthält neben den weiter oben beschriebenen Bestandteilen noch Reste von Aktivatoren, Suspendiermitteln und gegebenenfalls weiterer Hilfsstoffe, die bei der Herstellung der Polymeren verwendet wurden.

Das Polymeren-Gemisch kann ohne weitere Zusätze als Formmasse zur Produktion von gesinterten Formkörpern verwendet werden. In bestimmten Fällen kann es zweckmäßig sein, weitere Stoffe in geringen Mengen zuzusetzen. Solche Zusatzstoffe können beispielsweise sein: Antioxidantien, Thermostabilisatoren, Pigmente sowie Mittel zur Verbesserung der antistatischen Eigenschaften und Säuren.

Besonders vorteilhaft wird das erfindungsgemäße Polymeren-Gemisch zur Herstellung von Separatorplatten für elektrische Zellen eingesetzt.

Wie weiter oben bereits erwähnt, eignet sich das neue Polymeren-Gemisch besonders zur Produktion von Separator-Taschen, da es gute Biegsamkeit gegenüber biegsamen Sinterplatten nach dem Stand der Technik, verbesserte Reißfestigkeit und einen erweiterten Sinter-Temperatur-Bereich aufweist, wodurch die Einstellung eines gewünschten niedrigen Durchgangswiderstandes der Platte erleichtert und die Maschinen-Verarbeitbarkeit der Separator-Taschen verbessert wird.

Die nachfolgenden Beispiele und Vergleichsversuche sollen die Erfindung näher erläutern. Der Übersichtlichkeit wegen wurden die Versuchsergebnisse in einer Tabelle zusammengefaßt. Die verschiedenen Eigenschaften wurden nach folgenden Methoden bestimmt:

**K-Wert:** nach DIN 53 726

**Schüttgewicht:** nach DIN 53 468

**Kornverteilung:** mittels Luftstrahl-Siebanalyse nach Din-Entwurf Nr. 53 734

**Mittlerer Korndurchmesser:** durch Sedimentationsanalyse nach folgendem Verfahren: 1,82 Gramm Polyvinylchlorid werden in 600 ml einer 0,09 prozentigen Natriumpyrophosphat-Lösung, die gut entgast wurde, dispergiert und mit einer Sartorius-Sedimentationswaage vom Typ 4600 bei einer Vorschubgeschwindigkeit des Registrierpapiers von 120 mm/h die Absitztendenz gemessen. Die Ausrechnung erfolgt nach der bekannten Stoke'schen Formel und ergibt den Teilchenradius. Dieser wird mit dem Körnungsnetz nach Rosin-Ramler und Sperling ausgewertet.

**Bestimmungen an der gesinterten Platte**
Herstellung der Sinterplatten: Es werden Separatorplatten für elektrische Zellen auf einer kontinuierlichen Band-Sinteranlage hergestellt. Dabei wird auf ein endloses Stahlband Polyvinylchlorid-Pulver in bestimmter Schichtdicke aufgetragen und zur Sinterung durch einen Ofen geleitet, in dem durch elektrische Heizung eine Lufttemperatur von 225 °C eingestellt ist. Durch Variation der Bandgeschwindigkeit kann die Verweilzeit in der Sinterzone und damit die Stärke der Sinterung des PVC-Pulvers geregelt werden. Die Verweilzeit wird auf Werte zwischen 2,0 und 2,3 min eingestellt. Die Separatorplatten haben eine Blattstärke von 0,25 mm und eine Rippenstärke von 0,5 mm.

**Reißdehnung und Reißfestigkeit:**
In Anlehnung an DIN-Vorschrift 53 455 - Zugversuch von Kunststoffen - werden die Reißdehnung (Dehnung bei Reißkraft) und die Reißfestigkeit bestimmt. Da keine genormten Probekörper zur Verfügung stehen, werden aus den gesinterten Platten Prüflinge der Größe 60 · 140 mm geschnitten. Die Prüfung erfolgt auf einer Zugprüfmaschine entsprechend der allgemeinen Bedingungen für Zugprüfmaschinen (DIN 51 220, Klasse 1 sowie DIN 51 221) nach 16stündiger Lagerung im Normklima (DIN 5 001) bei 23 ± 2 °C und 50 ± 5 % relativer Luftfeuchtigkeit. Die Prüfgeschwindigkeit (Geschwindigkeit, mit der sich die beiden Einspannklemmen voneinander entfernen) beträgt 50 mm pro Minute ± 10 %. Der Kraft-Meßbereich liegt bei 10 N. Die Aufzeichnung von Kraft und Dehnung erfolgt über ein Schreibwerk auf einer Diagramm-Rolle. Der dehnungsproportionale Vorschub (Diagramm-Papier: Traverse) wird auf 5 zu 1 vergrößert eingestellt. Die Dehnung ist auf 100 mm freie Einspannlänge bezogen.

**Spezifischer elektrischer Widerstand:**
Die Ermittlung des elektrischen Widerstandes von Separatoren erfolgt über Messung des sogenannten Innenwiderstandes von Zellen, die in einer eigens dafür geschaffenen Prüfanordnung (Batterie-Zelle) gemessen wird. Die Differenz des Zellenwiderstandes mit und ohne Separator ergibt den Widerstand des Trennkörpers. Durch Multiplikation mit dem Quotienten aus Plattenfläche durch Plattendick wird der spezifische Durchgangswiderstand in Ω · cm ermittelt.

Die Prüfzelle selbst besteht aus einer positiven und einer negativen Platte ($PbO_2$ und Pb), die im Abstand von 7 mm parallel zueinander angebracht sind. Als Elektroden nimmt man Platten solcher Größe und Bauart, wie sie beim Bleiakkumulator verwendet werden. Genau zwischen den Elektroden, in einer fensterförmigen Aussparung der Größe 100 · 100 mm, befindet sich der Separator. Die Prüfzelle ist mit Schwefelsäure der Dichte 1,28 $g/cm^3$ gefüllt und voll aufgeladen. Die Messung solcher niederohmigen Innenwiderstände wird mit einem direkt anzeigenden Mikro-Ohm-Meter (Typ EMT 326, Firma Elektromeßtechnik E. Franz KG, Lahr) vorgenommen, welches an den beiden Elektroden angeschlossen ist. Sie erfolgt mit Netz-Wechselstrom.

**Kapillare Steighöhe:**
Als Maß für die Benetzbarkeit der Separatorplatten und zur Charakterisierung der Porosität dient die Ermittlung der kapillaren Steighöhe. Dabei wird ein 1 cm breiter Streifen des Separators in eine Proberöhre gestellt, die 1,5 cm hoch mit Wasser gefüllt ist. Als kapillare Steighöhe wird die Höhe der Benetzbarkeit in Millimeter nach einer Tauchzeit von 10 Minuten angegeben.

**Biegewinkel:**
Aus den wie weiter oben beschrieben hergestellten gesinterten Platten werden Prüflinge der Größe 90 · 140 mm so herausgeschnitten, daß die Rippen parallel der 140 mm langen Schnittkante verlaufen. Dieser Prüfkörper wird zwischen zwei ebenen Metallplatten von je 2 mm Stärke, die die Maße 120 · 100 mm aufweisen und deckend übereinander liegen, so eingespannt, daß etwa die Hälfte des Prüfkörpers über die Platten hinausragt und die Rippen des Prüfkörpers senkrecht zu den Kanten der beiden Metallplatten verlaufen, über die der Prüfkörper hinausragt. Die beiden Metallplatten sind waagrecht liegend angeordnet, die Rippen des Prüfkörpers sollen nach unten gerichtet sein. Die Kante der oben liegenden Metallplatte, über die der Prüfkörper hinausragt, ist halbkreisförmig gerundet. Um diese Kante wird nun der herausragende Teil des Prüfkörpers innerhalb 2 s um einen bestimmten, vorgewählten Winkel nach oben umgebogen.

Zum Umbiegen wird eine weitere Metallplatte benutzt, die den herausragenden Teil des Prüfkörpers von unten erfaßt und um den vorgewählten Winkel wendet. Nach abgeschlossener Wendung wird die Stelle des Prüflings, die um die gerundete Kante der oberen Metallplatte herumgebogen wurde, auf Risse geprüft. Sofern solche Risse auftreten, ist die Platte unbrauchbar. Die Bestimmung wird bei Zimmertemperatur und etwa 60 % relativer Feuchtigkeit durchgeführt. Durch eine Vorprüfung wird ermittelt bei welchen ungefähren Biegewinkeln erste Risse auftreten. Mit der genaueren Messung wird 30° unterhalb des durch die Vorprüfung ermittelten Winkels angefangen.

Nachdem 5 Prüfkörper hintereinander die Biegung ohne Risse überstanden haben, wird der Biegewinkel um 10° erhöht und dann werden weitere 5 Prüfkörper untersucht. So wird verfahren, bis an einem Prüfkörper mindestens ein Riß auftritt. Der größte Biegewinkel, bei dem noch keine Risse auftreten, ist in nachfolgender Tabelle angegeben.

**Vergleichsversuch A**

Es wird ein Vinylchlorid-Suspensions-Homopolymerisat vom K-Wert 65 eingesetzt, welches nach dem Verfahren der US-PS 3 951 883 hergestellt wurde. Nach der Polymerisation wurde N-Cocosalkyl-N,N-dimethyl-betain, wie nachfolgend näher beschrieben, zugesetzt. Das Polymerisat enthält in seinem Polymer-Anteil 100 Gew.-% polymerisierte Vinylchlorid-Einheiten, Art und Menge der in dem Polymerisat enthaltenen Tenside sind in nachfolgender Tabelle angegeben, ebenso die Eigenschaften des Polymerisates sowie der daraus hergestellten gesinterten Platten. Das Polymerisat ist in der Tabelle mit a bezeichnet.

**Vergleichsversuch B**

Es wird ein durch Suspensionspolymerisation hergestelltes Pfropf-Copolymerisat vom K-Wert 70 verwendet, welches nach EP-OS 111 917 hergestellt wurde und in seinem Polymer-Anteil folgende polymerisierte Einheiten enhält: 78,2 Gew.-% Vinylchlorid, 16,3 Gew.-% Ethylhexyacrylat, 0,65 Gew.-% Ethylen und 4,85 Gew.-% Vinylacetat.

Das Verhältnis der Menge der polymerisierte Einheiten des Vinylacetats zu denen des Ethylens beträgt 7,46 : 1. Die Summe der Mengen der polymerisierten Einheiten des Ethylhexylacrylats, Ethylens und Vinylacetats beträgt 21,8 Gew.-% der gesamten polymerisierten Einheiten. Die in dem Polymerisat enthaltenen Tenside sind nach Art und Menge in nachfolgender Tabelle angegeben, ebenso wie die Eigenschaften des Polymerisates und der daraus hergestellten gesinterten Platten. Das Polymerisat wird in nachfolgender Tabelle mit b bezeichnet.

**Beispiele 1 bis 3**

In diesen Beispielen wird die erfindungsgemäße Wirksamkeit von Abmischungen der weiter oben beschriebenen Polymerisate a und b in verschiedenen Mischungsverhältnissen gezeigt. Die Eigenschaften der jeweiligen Mischungen sowie der daraus hergestellten gesinterten Platten sind in nachfolgender Tabelle aufgeführt.

**Beispiel 4**

Dieses Beispiel wurde mit einer Mischung von gleichen Gewichtsteilen des weiter oben beschriebenen Polymerisates b mit einem durch Emulsionspolymerisation erzeugten Vinylchloridhomopolymerisat mit K-Wert 71, das in seinem Polymer-Anteil 100 Gew.-% polymerisierte Einheiten des Vinylchlorids und daneben als Emulgator die Natriumsalze eines weiter unten näher beschriebenen Alkansulfosäure-Gemisches, außerdem ein Ethylenoxid-Propylenoxid-Blockcopolymer enthält, durchgeführt. Die Mischung enthält außerdem noch ein Gemisch von gesättigten Monocarbonsäuren der Kettenlänge $C_{16}$ bis $C_{18}$. Das letztgenannte Emulsionsvinylchlorid-Homopolymerisat ist in nachfolgender Tabelle mit d bezeichnet. Diese Tabelle enthält ferner die Eigenschaften des gesamten Gemisches und der daraus hergestellten gesinterten Platten.

**Vergleichsversuch C**

Hierzu wurde, ähnlich dem Vergleichsversuch B, ein durch Suspensionspolymerisation hergestelltes Pfropf-Copolymerisat vom K-Wert 75 eingesetzt, welches in seinem Polymer-Anteil folgende polymerisierten Einheiten enthält: 82,7 Gew.-% Vinylchlorid, 16,2 Gew.-% Ethylhexylacrylat, 0,65 Gew.-% Ethylen und 0,45 Gew.-% Vinylacetat. Die Menge der polymerisierten Einheiten des Vinylacetats beträgt 4,8/7 der Menge der polymerisierten Einheiten des Ethylens. Die Summe der polymerisierten Mengen des Ethylhexylacrylats, Ethylens und Vinylacetats beträgt 17,3 Gew.-% der gesamten polymerisierten Einheiten. Das Polymerisat enthält ferner drei Tenside, deren Art und Menge in nachfolgender Tabelle angegeben ist, außerdem 0,05 Gew.-%, bezogen auf das Polymerisat, Phosphorsäure. Das Polymerisat ist in nachfolgender Tabelle mit c bezeichnet, die Eigenschaften des Polymerisates sowie der daraus hergestellten gesinterten Platten sind ebenfalls aus der Tabelle ersichtlich.

**Beispiel 5**

Hierfür wird ein Gemisch von gleichen Teilen der Polymerisate c und a, wie sie weiter oben (siehe Vergleichsversuche C und A) näher beschrieben sind, verwendet. Die Eigenschaften des Gemisches wie auch die der daraus hergestellten gesinterten Platten sind in nachfolgender Tabelle aufgeführt.

Die Abkürzungen in Zeile 1 der folgenden Tabelle bedeuten:

| | |
|---|---|
| Gew.-% | = Gewichtsprozent, bezogen auf das Tensid enthaltende Polymer-Gemisch |
| Gew.-% *) | = Gewichtsprozent, bezogen auf die gesamte Formmasse |
| SG | = Schüttgewicht |
| Korn-Ø | = Korndurchmesser |

RF = Reißfestigkeit
RD = Reißdehnung
spez. DW = spezifischer Durchgangswiderstand
KS = kapillare Steighöhe
BW = Biegewinkel.

Die in der zweiten und vierten senkrechten Spalte angegebenen Abkürzungen für die Art der verwendeten Polymeren sind weiter oben erklärt; die Abkürzungen in der sechsten und achten Spalte bedeuten:

CDMB = N-Cocosalkyl-N,N-dimethyl-betain, wobei "Cocosalkyl" ein Alkylgruppen-Gemisch folgender Kettenlängenverteilung (in %) bedeutet: $C_8$ = 7; $C_{10}$ = 6; $C_{12}$ = 51; $C_{14}$ = 19; $C_{16}$ =8; $C_{18}$ = 9.
SDMB = N-Stearyl-N,N-dimethyl-betain
DBS = n-Dodecylbenzolsulfonsäure
AS = n-Alkansulfonsäure mit verschiedenen Kettenlängen von $C_{12}$ bis $C_{16}$ mit einem überwiegenden Gehalt an $C_{14}$
ASNa = Natriumsalze des vorangehend beschriebenen Gemisches verschiedener n-Alkansulfonsäuren
POESL = Polyoxyethylen-Sorbitanmonolaurat
EPB = Ethylenoxid-Propylenoxid-Block-Copolymerisat
CS = Gemisch gesättigter Monocarbonsäuren der Kettenlängen $C_{16}$ bis $C_{18}$
$H_3PO_4$ = Orthophosphorsäure.

**Tabelle**

| Vergleichsversuch / Beispiel Nr. | Komponenten im Polymer-Gemisch I Art | I Menge Gew.-% | II Art | II Menge Gew.-% | III Art | III Menge Gew.-% | Weitere Zusätze Art | Weitere Zusätze Menge Gew.-% | Eigenschaften des Gemisches SG $g/dm^3$ | mittl. Korn-∅ µm | Kornverteilung Gew.-% < 33 µm | 33-63 µm | 63-125 µm | >125 µm | Eigenschaften der gesinterten Platte RFN $Nmm^{-2}$ | RD % | spez. DW Ω · cm | Ks · mm | BW |
|---|---|---|---|---|---|---|---|---|---|---|---|---|---|---|---|---|---|---|---|
| A | - | - | a | 99,82 | CDMB<br>DBS | 0,03<br>0,15 | - | - | 420 | 24 | 82 | 12 | 5,5 | 0,5 | 11,5 | 5,5 | 5,6 | 127 | 70° |
| B | b | 99,82, | - | - | CDMB<br>DBS | 0,03<br>0,15 | - | - | 590 | 27 | 63 | 27 | 9 | 1 | 5,2 | 18 | 10,0 | 77 | 130° |
| 1 | b | 74,87 | a | 24,95 | CDMB<br>DBS | 0,03<br>0,15 | - | - | 570 | 28 | 62 | 30 | 7 | 1 | 6,0 | 14,8 | 7,6 | 84 | 180° |
| 2 | b | 49,91 | a | 49,91 | CDMB<br>DBS | 0,03<br>0.15 | - | - | 540 | 29 | 63,5 | 31 | 5 | 0,5 | 7,1 | 12,1 | 7,2 | 92 | 180° |
| 3 | b | 24,95 | a | 74,87 | CDMB<br>DBS | 0,03<br>0,15 | - | - | 490 | 27 | 74,5 | 22 | 3 | 0,5 | 10,2 | 6,6 | 6,5 | 95 | 180° |
| 4 | b | 49,32 | d | 49,32 | CDMB<br>DBS<br>ASNa<br>EPB | 0,015<br>0,075<br>1,105<br>0,165 | CS | 0,36 | 520 | 27 | 64 | 28,5 | 7 | 0,5 | 8,6 | 10,9 | 8,8 | 85 | 160° |
| C | c | 99,75 | - | - | SDMB<br>AS<br>POESL | 0,05<br>0,003<br>0,2 | $H_3PO_4$ | 0,05 | 560 | 24 | 70 | 23 | 6 | 1 | 3,8 | 16,0 | 7,7 | 82 | 120° |
| 5 | c | 49,89 | a | 49,89 | CDMB<br>SDMB<br>DBS<br>AS<br>POESL | 0,015<br>0,025<br>0,075<br>0,0015<br>0,1 | $H_3PO_4$ | 0,025 | 500 | 29 | 69 | 27 | 3 | 1 | 8,3 | 13,4 | 7,5 | 80 | 180° |

**Patentansprüche**

1. Sinterfähige, feinteilige Formmasse, die im wesentlichen aus einem Gemisch von mindestens zwei Polymeren auf Basis von Vinylchlorid und mindestens einem Tensid besteht, in dem jedes der Polymeren einen K-Wert von 55 bis 90 und die Polymeren-Mischung eine mittlere Korngröße von 10 bis 50 µm, ein Schüttgewicht von 400 bis 700 $g/dm^3$ und eine Kornverteilung von

99 bis 30 Gew.-%, bezogen auf die Mischung < 33 µm

1 bis 60 Gew.-%, bezogen auf die Mischung von 33 bis 63 µm

0 bis 9 Gew.-%, bezogen auf die Mischung von 63 bis 125 µm

0 bis 1 Gew.-%, bezogen auf die Mischung > 125 µm aufweist, dadurch gekennzeichnet, daß das Gemisch enthält

I. 95 bis 10 Gew.-%, bezogen auf das Gemisch, von einem durch Suspensionspolymerisation in wäßriger Phase hergestellten sinterfähigen Copolymerisat oder Pfropfcopolymerisat, dessen Polymeranteil besteht aus

a) 90 bis 70 Gew.-% polymerisierten Einheiten des Vinylchlorids,
b) 10 bis 30 Gew.-% polymerisierten Einheiten mindestens eines Acrylsäurealkylesters mit 4 bis 10 C-Atomen in der Alkylgruppe,
c) 0 bis 7 Gew.-% polymerisierten Einheiten des Ethylens, die aus einem Ethylen-Vinylacetat-Mischpolymerisat stammen, das zur Herstellung des Pfropfcopolymerisates verwendet wurde,
d) 0 bis 15 Gew.-% polymerisierten Einheiten des Vinylacetats mit der Maßgabe, daß die Menge von d) mindestens 3/7 der Menge von c) und die Summe der Mengen von b) plus c) plus d) 10 bis 30 Gew.-% beträgt; ferner

II) 5 bis 90 Gew.-%, bezogen auf das Gemisch, von mindestens einem sinterfähigen Polymerisat oder Pfropfcopolymerisat, dessen Polymer-Anteil besteht aus:
α) 100 bis 95 Gew.-% polymerisierten Einheiten des Vinylchlorids,
β) 0 bis 5 Gew.-% polymerisierten Einheiten des Ethylens, die aus einem Ethylen-Vinylacetat-Mischpolymerisat stammen, das zur Herstellung des Pfropfcopolymerisates verwendet wurde,
γ) 0 bis 5 Gew.-% polymerisierten Einheiten des Vinylacetats, mit der Maßgabe, daß die Menge von y) mindestens 3/7 der Menge von β) und die Menge von β) plus γ) 0 bis 5 Gew.-% des Polymer-Anteils beträgt; weiterhin

III) 0,05 bis 5 Gew.-%, bezogen auf das Gemisch von mindestens einem wasserlöslichen Tensid, das ein Bestandteil eines oder mehrerer Polymerisate sein kann, die vorstehend unter I und/oder II beschrieben sind; mit der Maßgabe, daß die Mengen von I plus II plus III 100 Gew.-% des Gemisches ergeben.

2. Formmasse nach Anspruch 1, dadurch gekennzeichnet, daß das Gemisch der Polymeren enthält
70 bis 20 Gew.-%, bezogen auf das Gemisch der im Anspruch 1 beschriebenen Komponente I
und 30 bis 80 Gew.-%, bezogen auf das Gemisch der im Anspruch 1 beschriebenen Komponente II.

3. Formmasse nach Anspruch 1 oder 2, dadurch gekennzeichnet, daß der Polymer-Anteil der in Anspruch 1 genannten Komponente I besteht aus

a) 89 bis 70 Gew.-% polymerisierten Einheiten des Vinylchlorids,
b) 10,4 bis 29,7 Gew.-% polymerisierten Einheiten mindestens eines Acrylsäurealkylesters mit 4 bis 10 C-Atomen in der Alkylgruppe,
c) 0 bis 7 Gew.-% polymerisierten Einheiten des Ethylens, die aus einem Ethylen-Vinylacetat-Mischpolymerisat stammen, das zur Herstellung des Propfcopolymerisates verwendet wurde,
d) 0,3 bis 11 Gew.-% polymerisierten Einheiten des Vinylacetats,

mit der Maßgabe, daß die Menge von d) mindestens 3/7 der Menge von c) und die Summe der Mengen von b) plus c) plus d) 11 bis 30 Gew.-% beträgt.

4. Formmasse nach einem oder mehreren der Ansprüche 1 bis 3, dadurch gekennzeichnet, daß der Polymer-Anteil der in Anspruch 1 genannten Komponente I besteht aus

a) 89 bis 70 Gew.-% polymerisierten Einheiten des Vinylchlorids,
b) 10,4 bis 29,4 Gew.-% polymerisierten Einheiten mindestens eines Acrylsäurealkylesters mit 4 bis 10 C-Atomen in der Alkylgruppe,
c) 0,3 bis 2,5 Gew.-% polymerisierten Einheiten des Ethylens, die aus einem Ethylen-Vinylacetat-Mischpolymerisat stammen, das zur Herstellung des Propfcopolymerisates verwendet wurde,
d) 0,3 bis 11 Gew.-% polymerisierten Einheiten des Vinylacetats,

mit der Maßgabe, daß die Menge von d) mindestens 3/7 der Menge von c) und die Summe der Mengen von b) plus c) plus d) 11 bis 30 Gew.-% beträgt.

5. Formmasse nach einem oder mehreren der Ansprüche 1 bis 4, dadurch gekennzeichnet, daß der Polymer-Anteil der in Anspruch 1 genannten Komponente II zu 100 Gew.-% aus polymerisierten Einheiten des Vinylchlorids besteht.

6. Formmasse nach einem oder mehreren der Ansprüche 1 bis 5, dadurch gekennzeichnet, daß mindestens ein im Gemisch enthaltenes wasserlösliches Tensid ein für die Polymerisation von Vinylchlorid bekannter oberflächenaktiver Emulgator ist.

7. Formmasse nach einem oder mehreren der Ansprüche 1 bis 5, dadurch gekennzeichnet, daß das wasserlösliche Tensid ein quartäres N-Atom enthält, welches mit einer Carbon- oder Sulfonsäuregruppe ein Salz bildet.

8. Formmasse nach einem oder mehreren der Ansprüche 1 bis 7, dadurch gekennzeichnet, daß das Gemisch 0,05 bis 2 Gew.-%, bezogen auf das Gemisch von mindestens einem wasserlöslichen Tensid enthält.

9. Verwendung der Formmasse nach einem oder mehreren der Ansprüche 1 bis 8 zur Herstellung von gesinterten Formkörpern, die als Separatoren in elektrischen Zellen dienen.

**Claims**

1. A sinterable, finely particular moulding composition which is essentially composed of a mixture of at least two polymers based on vinyl chloride and at least one surfactant, in which each of the polymers has a K value of 55 to 90 and the mixture of polymers has an average particle size of 10 to 50 µm, a bulk density of 400 to 700 g/dm$^3$ and a particle size distribution of 99 to 30 % by weight, relative to the mixture, < 33 µm, 1 to 60 % by weight, relative to the mixture, from 33 to 63 µm, 0 to 9 % by weight, relative to the mixture, from 63 to 125 µm and 0 to 1 % by weight, relative to the mixture, < 125 µm, characterised in that the mixture contains

I. 95 to 10 % by weight, relative to the mixture, of a sinterable copolymer or a sinterable first graft copolymer prepared by suspension polymerisation in an aqueous phase and in which the polymer component is composed of:
  a) 90 to 70 % by weight of polymerised units of vinyl chloride,
  b) 10 to 30 % by weight of polymerised units of at least one alkyl acrylate having 4 to 10 carbon atoms in the alkyl group,
  c) 0 to 7 % by weight of polymerised units of ethylene which are descended from a copolymer of ethylene and vinyl acetate being employed for the production of said first graft copolymer, and
  d) 0 to 15 % by weight of polymerised units of vinyl acetate, subject to the proviso that the amount of d) is at least 3/7 of the amount of c) and that the sum of the amounts of b) plus c) plus d) is 10 to 30 % by weight; and also

II. 5 to 90 % by weight, relative to the mixture, of at least one sinterable polymer or sinterable second graft copolymer in which the polymer component is composed of:
  α) 100 to 95 % by weight of polymerised units of vinyl chloride,
  β) 0 to 5 % by weight of polymerised units of ethylene which are descended from a copolymer of ethylene and vinyl acetate being employed for the production of said second graft copolymer, and
  γ) 0 to 5 % by weight of polymerised units of vinyl acetate, subject to the proviso that the amount of γ) is at least 3/7 of the amount of β) and that the amount of β) plus γ) is 0 to 5 % by weight of the polymer component; and also

III. 0.05 to 5 % by weight, relative to the mixture, of at least one water-soluble surfactant which can be a constituent of one or more polymers described above under I and/or II, subject to the proviso that the amounts of I plus II plus III add up to 100 % by weight of mixture.

2. A moulding composition as claimed in claim 1, characterised in that the mixture of polymers contains 70 to 20 % by weight, relative to the mixture, of the component I described in claim 1, and 30 to 80 % by weight, relative to the mixture, of the component II described in claim 1.

3. A moulding composition as claimed in claim 1 or 2, characterised in that the polymer component of the component I mentioned in claim 1 is composed of
  a) 89 to 70 % by weight of polymerised units of vinyl chloride,
  b) 10.4 to 29.7 % by weight of polymerised units of at least one alkyl acrylate having 4 to 10 carbon atoms in the alkyl group,
  c) 0 to 7 % by weight of polymerised units of ethylene which are descended from a copolymer of ethylene and vinyl acetate being employed for the production of the first graft copolymer, and
  d) 0.3 to 11 % by weight of polymerised units of vinyl acetate, subject to the proviso that the amount of d) is at least 3/7 of the amount of c) and the sum of the amounts of b) plus c) plus d) is 11 to 30 % by weight.

4. A moulding composition as claimed in one or more of claims 1 to 3, characterised in that the polymer component of the component I mentioned in claim 1 is composed of
  a) 89 to 70 % by weight of polymerised units of vinyl chloride,
  b) 10.4 to 29.4 % by weight of polymerised units of at least one alkyl acrylate having 3 to 10 carbon atoms in

the alkyl group,

c) 0.3 to 2.5 % by weight of polymerised units of ethylene which are descended from a copolymer of ethylene and vinyl acetate being employed for the production of the first graft copolymer, and

d) 0.3 to 11 % by weight of polymerised units of vinyl acetate, subject to the proviso that the amount of d) is at least 3/7 of the amount of c) and the sum of the amounts of b) plus c) plus d) is 11 to 30 % by weight.

5. A moulding composition as claimed in one ore more of claims 1 to 4, characterised in that the polymer component of the component II mentioned in claim 1 is composed of 100 % by weight of polymerised units of vinyl chloride.

6. A moulding composition as claimed in one ore more of claims 1 to 5, characterised in that at least one water-soluble surfactant present in the mixture is a surface-active emulsifier which is known for the polymerisation of vinyl chloride.

7. A moulding composition as claimed in one ore more of claims 1 to 5, characterised in that the water-soluble surfactant contains a quaternary nitrogen atom which forms a salt with a carboxylic or sulfonic acid group.

8. A moulding composition as claimed in one ore more of claims 1 to 7, characterised in that the mixture contains 0.05 to 2 % by weight, relative to the mixture, of at least one water-soluble surfactant.

9. The use of the moulding composition as claimed in one or more of claims 1 to 8 for the production of sintered mouldings used as separators in electric cells.

**Revendications**

1. Composition frittable à mouler, en fines particules, qui consiste essentiellement en un mélange d'au moins deux polymères à base de chlorure de vinyle et d'au moins un tensio-actif, dans laquelle chacun des polymères présente une valeur de K de 55 à 90 et le mélange des polymères a une grosseur moyenne des grains allant de 10 à 50 µm, une masse volumique apparente de 400 à 700 g/dm$^3$ et une répartition des grains de

99 à 30 % en poids, sur la base du mélange, ayant moins de 33 µm,

1 à 60 % en poids, sur la base du mélange, ayant de 33 à 63 µm,

0 à 9 % en poids, sur la base du mélange, ayant 63 à 125 µm,

0 à 1 % en poids, sur la base du mélange, ayant plus de 125 µm,

composition caractérisée en ce que le mélange contient

I. 95 à 10 % en poids, par rapport au mélange, d'un copolymère ou copolymère greffé, frittable, préparé en phase aqueuse par polymérisation en suspension, dont la partie polymère consiste en:

a) 90 à 70 % en poids de motifs chlorure de vinyle polymérisés,

b) 10 à 30 % en poids de motifs polymérisés d'au moins un acrylate d'alkyle ayant 4 à 10 atomes de carbone dans le groupe alkyle,

c) 0 à 7 % en poids de motifs polymérisés de l'éthylène, provenant d'un copolymère éthylène/acétate de vinyle, ayant servi à la préparation du copolymère greffé,

d) 0 à 15 % en poids de motifs polymérisés d'acétate de vinyle, à la condition que la quantité de d) représente au moins 3/7 de la quantité de c), et la somme des quantités de b) plus c) plus d) représente 10 à 30 % en poids; et

II. 5 à 90 % en poids, sur la base du mélange, d'au moins un polymère frittable ou copolymère greffé frittable, dont la partie polymère consiste en:

α) 100 à 95 % en poids de motifs polymérisés du chlorure de vinyle,

β) 0 à 5 % en poids de motifs polymérisés de l'éthylène, provenant d'un copolymère éthylène/acétate de vinyle, ayant servi à préparer le copolymère greffé,

γ) 0 à 5 % en poids de motifs polymérisés de l'acétate de vinyle, à la condition que la quantité de γ plus 3/7 de la quantité de β et la quantité de β plus γ représente 0 à 5 % en poids de la partie polymère; et

III. 0,05 à 5 % en poids, sur la base du mélange, d'au moins un tensio-actif hydrosoluble, qui peut faire partie d'un ou plusieurs polymères qui ont été décrits ci-dessus en I et/ou II, étant bien entendu que les quantités de I 15 plus II plus III donnent 100 % du poids du mélange.

2. Composition à mouler selon la revendication 1, caractérisée en ce que le mélange des polymères contient 70 à 20 % en poids, sur la base du mélange, du composant I décrit à la revendication 1, et 30 à 80 % en poids, sur la base du mélange, du composant II décrit à la revendication 1.

3. Composition à mouler selon la revendication 1 ou 2, caractérisée en ce que la partie polymère du composant I cité à la revendication 1 consiste en
   a) 89 à 70 % en poids de motifs polymérisés du chlorure de vinyle,
   b) 10,4 à 29,7 % en poids de motifs polymérisés d'au moins un acrylate d'alkyle comportant 4 à 10 atomes de carbone dans le groupe alkyle,
   c) 0 à 7 % en poids de motifs polymérisés de l'éthylène, qui proviennent d'un copolymère éthylène/acétate de vinyle ayant servi à préparer le polymère de greffage,
   d) 0,3 à 11 % en poids de motifs polymérisés de l'acétate de vinyle, à la condition que la quantité de d) représente au moins 3/7 de la quantité de c), et que la somme des quantités de c) plus d) représente 11 à 30 % en poids.

4. Composition à mouler selon une ou plusieurs des revendications 1 à 3, caractérisée en ce que la partie polymère du composant 1 cité à l'exemple 1 consiste en :
   a) 89 à 70 % en poids de motifs polymérisés du chlorure de vinyle,
   b) 10,4 à 29,4 % en poids de motifs polymérisés d'au moins un acrylate d'alkyle comportant 4 à 10 atomes de carbone dans le groupe alkyle,
   c) 0,3 à 2,5 % en poids de motifs polymérisés de l'éthylène, provenant d'un copolymère éthylène/acétate de vinyle ayant servi à préparer le copolymère de greffage,
   d) 0,3 à 11 % en poids de motifs polymérisés de l'acétate de vinyle,
   à la condition que la quantité de d représente au moins 3/7 de la quantité c), et que la somme des quantités de b) plus c) plus d) représente 11 à 30 % en poids.

5. Composition à mouler selon une ou plusieurs des revendications 1 à 4, caractérisée en ce que la partie polymère du composant II cité à la revendication 1 consiste à 100 % en poids en des motifs polymérisés du chlorure de vinyle.

6. Composition à mouler selon une ou plusieurs des revendications 1 à 5, caractérisée en ce qu'au moins un tensio-actif hydrosoluble contenu dans le mélange est un émulsifiant tensio-actif connu pour la polymérisation du chlorure de vinyle.

7. Compositions à mouler selon une ou plusieurs des revendications 1 à 5, caractérisées en ce que le tensioactif hydrosoluble contient un atome de N quaternaire, qui forme un sel avec un groupe acide carboxylique ou acide sulfonique.

8. Composition à mouler selon une ou plusieurs des revendications 1 à 7, caractérisée en ce que le mélange contient 0,05 à 2 % en poids, sur la base du mélange, d'au moins un tensio-actif hydrosoluble.

9. Utilisation des compositions à mouler selon une ou plusieurs des revendications 1 à 8, pour produire des objets moulés frittés, servant de séparateurs dans des cellules électriques.